# EUROPÄISCHE PATENTSCHRIFT

(11) **EP 0 685 157 B1**
(45) Veröffentlichungstag und Bekanntmachung des Hinweises auf die Patenterteilung: **06.05.1999**
(21) Anmeldenummer: 95810351.7
(22) Anmeldetag: 26.05.1995
(51) Int. Cl.: A01N 37/22

(54) **Selektiv-herbizides Mittel**
Selective herbicidal agent
Agent herbicide sélectif

(30) Priorität: 03.06.1994 CH 1758/94; 14.07.1994 CH 2253/94
(43) Veröffentlichungstag der Anmeldung: 06.12.1995
(73) Patentinhaber: Novartis AG, 4058 Basel (CH); Novartis-Erfindungen Verwaltungsgesellschaft m.b.H., 1235 Wien (AT)
(72) Erfinder: Glock, Jutta, Dr., CH-4322 Mumpf (CH); Hudetz, Manfred, Dr., CH-4310 Rheinfelden (CH)

(56) Entgegenhaltungen:
- EP-A- 0 077 755
- FR-A- 2 514 611
- C.R. WORTHING 'The Pesticide Manual, 9th edition' 1991 , THE BRITISH CROP PROTECTION COUNCIL , UK * Seite 61, Absatz 5 *

## Beschreibung

Die vorliegende Erfindung betrifft ein selektiv-herbizides Mittel zur Bekämpfung von Gräsern und Unkräutern in Kulturen von Nutzpflanzen, insbesondere in Maiskulturen, welches ein Herbizid und einen Safener (Gegenmittel, Antidot) enthält und welches die Nutzpflanzen, nicht aber die Unkräuter vor der phytotoxischen Wirkung des Herbizides bewahrt, sowie die Verwendung dieses Mittels oder der Kombination Herbizid und Safener zur Unkrautbekämpfung in Nutzpflanzenkulturen.

Beim Einsatz von Herbiziden können z.B. in Abhängigkeit von der Dosis des Herbizids und der Applikationsart, der Kulturpflanze, der Bodenbeschaffenheit und den klimatischen Bedingungen wie Belichtungsdauer, Temperatur und Niederschlagsmengen auch die Kulturpflanzen in erheblichem Maße geschädigt werden.

Um diesem und ähnlichen Problemen zu begegnen, sind schon verschiedene Stoffe als Safener vorgeschlagen worden, welche befähigt sind, die schädigende Wirkung des Herbizids auf die Kulturpflanze zu antagonisieren, das heißt, die Kulturpflanze davor zu schützen, wobei aber die Herbizidwirkung auf die zu bekämpfenden Unkräuter praktisch nicht beeinträchtigt wird. Dabei hat es sich gezeigt, daß die vorgeschlagenen Safener sowohl bezüglich der Kulturpflanzen als auch bezüglich des Herbizids und teilweise auch in Abhängigkeit von der Applikationsart oft sehr artspezifisch wirken, das heißt, ein bestimmter Safener eignet sich oft nur für eine bestimmte Kulturpflanze und eine spezielle Herbizid-Stoffklasse.

Es wurde nun gefunden, daß sich gewisse Chlor- und Dichlor-acetamide zum Schützen von Kulturpflanzen vor der phytotoxischen Wirkung der Verbindung aRS,1'S(-)N-(1'-Methyl-2'-methoxyethyl)-N-chloracetyl-2-ethyl-6-methylanilin der Formel I

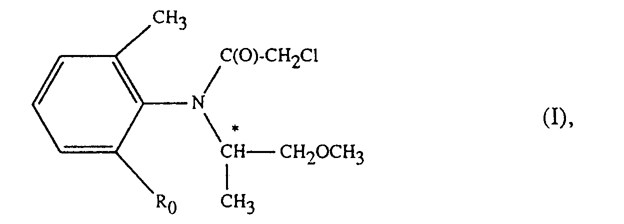

worin R₀ Methyl oder Ethyl bedeutet, eignen.

Erfindungsgemäß wird somit ein selektiv-herbizides Mittel vorgeschlagen, welches dadurch gekennzeichnet ist, daß es neben üblichen inerten Formulierungshilfsmitteln wie Trägerstoffen, Lösungsmitteln und Netzmitteln als Wirkstoff eine Mischung aus
a) einer herbizid wirksamen Menge aRS, 1'S(-)N-(1'- Methyl-2'-methoxyethyl)-N-chloracetyl-2-ethyl 6-methylanilin der Formel I 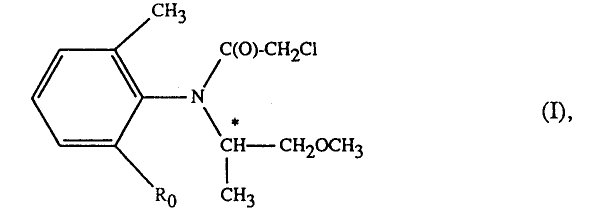 worin R₀ Methyl oder Ethyl bedeutet, und
b) einer herbizid-antagonistisch wirksamen Menge einer Verbindung der Formel II

   R-CHYCl (II)
enthält, worin R ein Rest der Formel 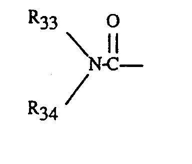 ist, worin
R₃₃ und R₃₄ unabhängig voneinander für C₁-C₆-Alkyl oder C₂-C₆-Alkenyl; oder R₃₃ und R₃₄ zusammen für 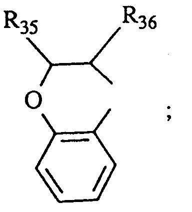 R₃₅ und R₃₆ unabhängig voneinander für Wasserstoff oder C₁-C₆-Alkyl;
oder R₃₃ und R₃₄ zusammen für 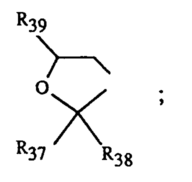 R₃₇ und R₃₈ unabhängig voneinander für C₁-C₄-Alkyl, oder R₃₇ und R₃₈ zusammen für -(CH₂)₅-;
R₃₉ für Wasserstoff, C₁-C₄-Alkyl oder 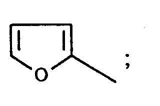 oder R₃₃ und R₃₄ zusammen für 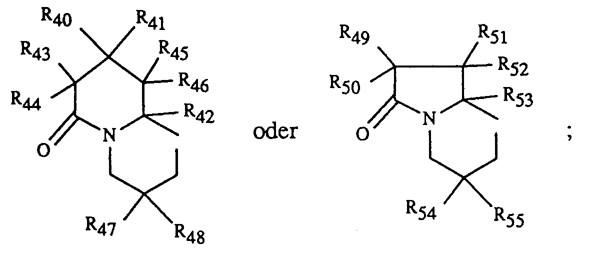 und R₄₀, R₄₁, R₄₂, R₄₃, R₄₄, R₄₅, R₄₆, R₄₇, R₄₈, R₄₉, R₅₀, R₅₁, R₅₂, R₅₃, R₅₄ und R₅₅ unabhängig voneinander für Wasserstoff oder C₁-C₄-Alkyl stehen,
oder R ein Rest der Formel 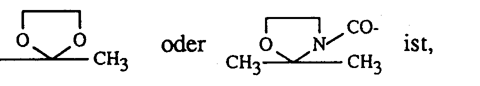 ist, oder R ein Rest der Formel 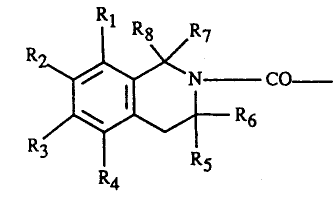 ist, worin R₁, R₂, R₃ und R₄ unabhängig voneinander Wasserstoff, C₁-C₄-Alkyl, C₁-C₄-Alkoxy oder C₁-C₄-Haloalkyl sind, R₅, R₆, R₇ und R₈ unabhängig voneinander Wasserstoff, C₁-C₄-Alkyl oder C₁-C₄-Haloalkyl sind, oder R ein Rest der Formel 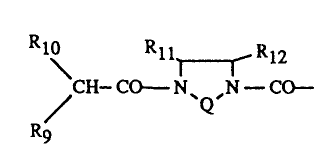 ist, worin R₉ C₁-C₄-Alkyl oder Halogen, R₁₀ Halogen ist, R₁₁ und R₁₂ unabhängig voneinander Wasserstoff oder C₁-C₄-Alkyl sind, und Q C₁-C₄-Alkylen oder alkylsubstituiertes C₁-C₄-Alkylen ist,
oder R ein Rest der Formel 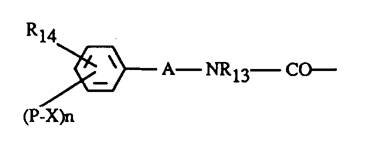 ist, worin R₁₄ Wasserstoff, Halogen, C₁-C₄-Alkyl, Dioxymethylen, C₁-C₄-Alkoxy, C₂-C₄-Alkenyloxy, C₂-C₄-Alkinyloxy oder Cyano-C₁-C₄-Alkyl, P C₁-C₄-Alkyl, C₂-C₄-Alkenyl, C₂-C₄-Alkinyl, C₃-C₈-Cycloalkyl, C₁-C₄-Alkoxy-C₁-C₄-Alkyl, C₂-C₄-Alkenoxy-C₁-C₄-Alkyl, C₂-C₄-Alkinoxy-C₁-C₄-Alkyl, C₁-C₄-Alkyl-thio-C₁-C₄-Alkyl, C₂-C₄-Alkenyl-thio-C₁-C₄-Alkyl, C₂-C₄-Alkinyl-thio-C₁-C₄-Alkyl, C₁-C₄-Alkyl-sulfinyl-C₁-C₄-Alkyl, C₁-C₄-Alkyl-sulfonyl-C₁-C₄-Alkyl, Halogen-C₁-C₄-Alkyl, Cyano-C₁-C₄-Alkyl, 2,2-Di-C₁-C₄-Alkoxy-C₁-C₄-Alkyl, 1,3-Dioxolan-2-yl-C₁-C₄-Alkyl, 1,3-Dioxolan-4-yl-C₁-C₄-Alkyl, 2,2-Di-C₁-C₄-Alkyl-1,3-dioxolan-4-yl-C₁-C₄-Alkyl, 1,3-Dioxan-2yl-C₁-C₄-Alkyl, 2-Benzpyranyl-C₁-C₄-Alkyl, C₁-C₄-Alkoxycarbonyl oder C₂-C₄-Alkenyloxycarbonyl oder Tetrahydrofurfuryl-C₁-C₄-Alkyl, die Gruppe P-X auch Halogen-C₁-C₄-Alkyl, X O, S, SO oder SO₂, n 1, 2 oder 3, A ein C₁-C₈-Kohlenwasserstoffrest oder ein mit Alkoxy, Alkylthio, Fluor, Cyano oder Halogenalkyl substituierter C₁-C₈-Kohlenwasserstoffrest, und R₁₃ Wasserstoff, einen C₁-C₅-Kohlenwasserstoffrest, ein mit Alkoxy, poly-Alkoxy, Halogen, Cyano oder Trifluormethyl substituierter C₁-C₅-Kohlenwasserstoffrest, C₃-C₈-Cycloalkyl, C₁-C₄-Alkyl-C₃-C₈-Cycloalkyl, Di-C₁-C₄-Alkoxy-C₁-C₄-Alkyl, 1,3-Dioxolan-2-yl-C₁-C₄-Alkyl, 1,3-Dioxolan-4-yl-C₁-C₄-Alkyl, 1,3-Dioxan-2-yl-C₁-C₄-Alkyl, Furyl-C₁-C₄-Alkyl, Tetrahydrofuryl-C₁-C₄-Alkyl oder ein Rest der Formel -NHCO₂R₀₁, -CH₂CO₂R₀₁, -CH(CH₃)CO₂R₀₁ oder -CH(R₀₂)-C(R₀₃)=NOR₀₄ ist, worin R₀₁ Methyl, Ethyl, Propyl, Isopropyl oder Allyl ist, R₀₂ und R₀₃ jeweils Wasserstoff oder C₁-C₄-Alkyl sind und R₀₄ Wasserstoff, C₁-C₄-Alkyl, C₂-C₄-Alkenyl oder C₂-C₄-Alkinyl ist,
oder R ein Rest der Formel (H₅C₂O)₂P(O)CH₂NHCO-
oder 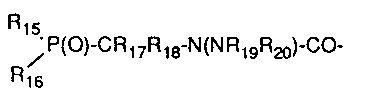 ist, worin R₁₅ und R₁₆ unabhängig voneinander Hydroxyl, C₁-C₄-Alkyl, Aryl, C₁-C₄-Alkoxy, C₂-C₄-Alkenyloxy, C₂-C₄-Alkinyloxy, C₂-C₄-Halogenalkoxy, C₂-C₈-Alkoxyalkoxy, C₁-C₄-Cyanoalkoxy, C₁-C₄-Phenylalkoxy oder Aryloxy oder mit Halogen, Cyano, Nitro oder C₁-C₄-Alkoxy substituiertes Aryloxy sind, R₁₇ Wasserstoff, C₁-C₄-Alkyl oder Phenyl oder Phenyl substituiert mit Halogen, Cyano, Nitro oder C₁-C₄-Alkoxy, R₁₈ Wasserstoff oder C₁-C₄-Alkyl, R₁₉ Wasserstoff oder einen Rest der Formel -COCX₁X₂-R₀₆ oder einen mit Halogen substituierten Alkenoylrest mit 2 bis 4 Kohlenstoffatomen im Alkenylteil ist, worin X₁ und X₂ unabhängig voneinander Wasserstoff oder Halogen sind, oder ein Rest der Formel -COOR₀₇ oder -COR₀₈ oder ein C₁-C₄-Alkyl-, C₂-C₄-Alkenyl- oder C₁-C₄-Phenylalkylrest ist, der am Phenylring mit Halogen, Cyano, Nitro oder C₁-C₄-Alkoxy substituiert sein kann, und R₂₀ Wasserstoff, C₁-C₄-Alkyl, C₂-C₄-Alkenyl oder C₂-C₄-Alkinyl ist, R₀₆ Wasserstoff, Halogen oder C₁-C₆-Alkyl, R₀₇ C₁-C₄-Alkyl, C₁-C₄-Phenylalkyl oder mit Halogen, Cyano, Nitro oder C₁-C₄-Alkoxy im Phenylteil substituiertes C₁-C₄-Phenylalkyl und R₀₈ C₁-C₄-Alkyl, C₂-C₄-Alkenyl, C₂-C₄-Alkinyl, Phenyl, C₁-C₄-Phenylalkyl oder mit Halogen, Cyano, Nitro oder C₁-C₄-Alkoxy im Phenylteil substituiertes C₁-C₄-Phenylalkyl ist,
oder R ein Rest der Formel 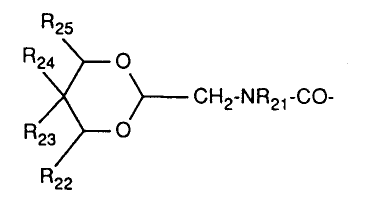 oder der Formel 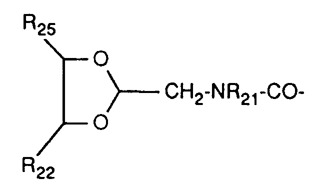 ist, worin R₂₁ Methyl, Ethyl, Propyl, 1-Methylethyl, 2-Propenyl, 2-Butenyl, 1,1-Dimethyl-2-propenyl, 2-Propinyl oder 2-Methyl-2-propinyl ist, und R₂₂, R₂₃, R₂₄ und R₂₅ unabhängig voneinander Wasserstoff oder Methyl sind,
und Y Chlor ist, oder
Y Wasserstoff ist , wenn R ein Rest der Formel (H₅C₂O)₂P(O)CH₂NHCO- ist.

Die im Zusammenhang mit den Verbindungen der Formel II genannten Alkylreste können geradkettig oder verzweigt sein und beispielsweise Methyl, Ethyl, Propyl, Butyl, Pentyl und Hexyl sowie verzweigte Isomere davon bedeuten. Geeignete Alkenylreste leiten sich von den aufgezählten Alkylresten ab. Als Aryloxy kommen vor allem Phenyl- und Naphthyloxy in Betracht. Unter Kohlenwasserstoffresten sind ein- oder zweiwertige, gesättigte oder ungesättigte geradkettige oder verzweigte oder gesättigte oder ungesättigte cyclische Reste aus Kohlenstoff und Wasserstoff zu verstehen, wie z. B. Alkyl, Cycloalkyl, Alkenyl, Alkinyl, Cycloalkenyl und Phenyl.

Gegenstand der vorliegenden Erfindung ist ferner die Verwendung des erfindungsgemäßen Mittels zur Bekämpfung von Unkräutern und Gräsern in Nutzpflanzenkulturen, insbesondere Mais.

Für die Verwendung im erfindungsgemäßen Mittel bevorzugte Verbindungen der Formel II sind solche, worin R ein Rest der Formel 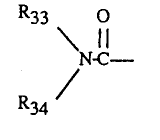 ist,
worin R₃₃ und R₃₄ zusammen für 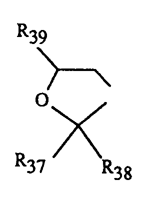 stehen;
R₃₇ und R₃₈ unabhängig voneinander für C₁-C₄-Alkyl; oder R₃₇ und R₃₈ zusammen für -(CH₂)₅- stehen; und R₃₉ für Wasserstoff, C₁-C₄-Alkyl oder 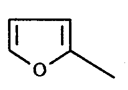 steht.

Beispiele für besonders geeignete Verbindungen der Formel II sind in den folgenden Tabellen 1 und 2 aufgeführt.

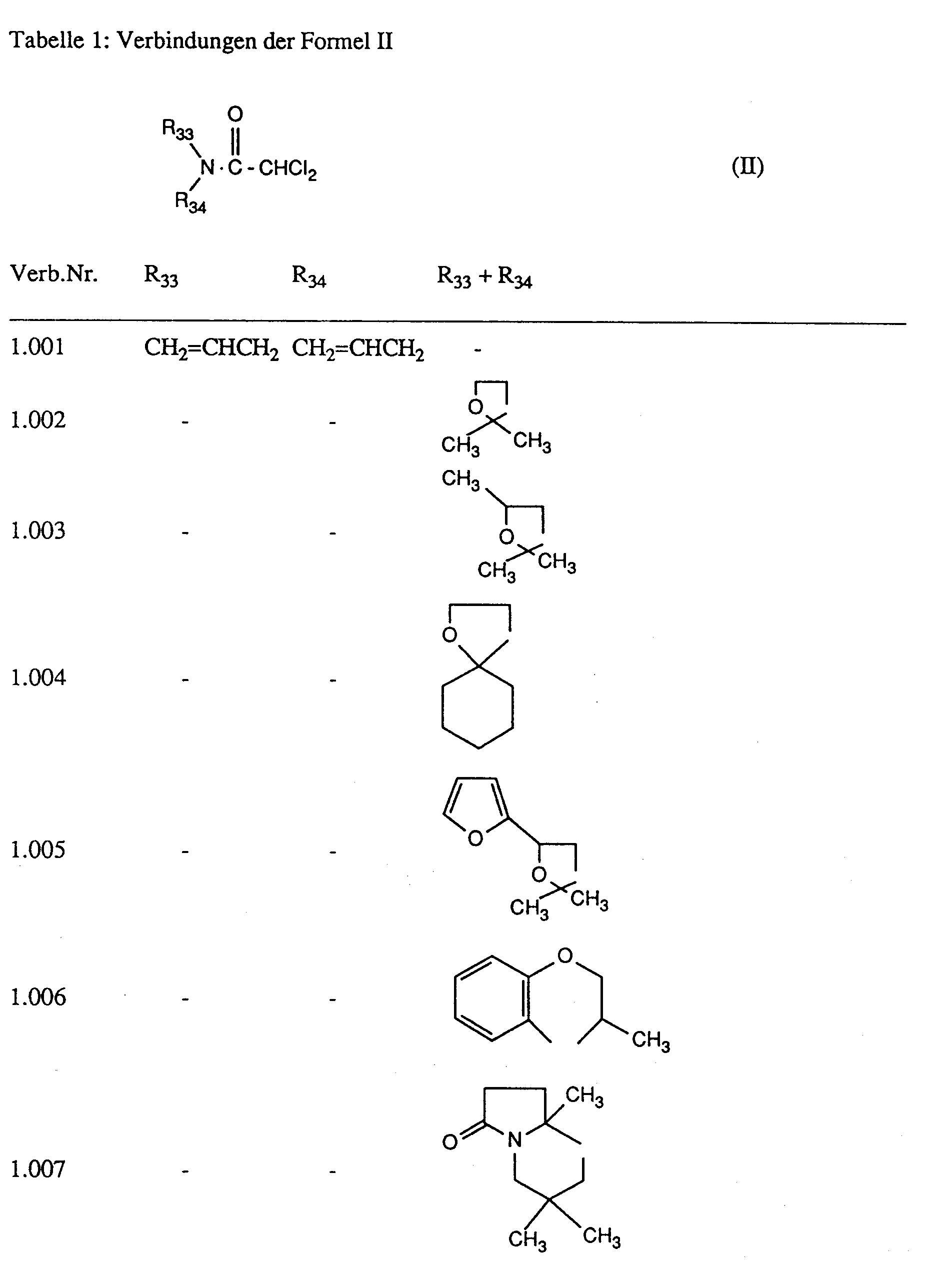

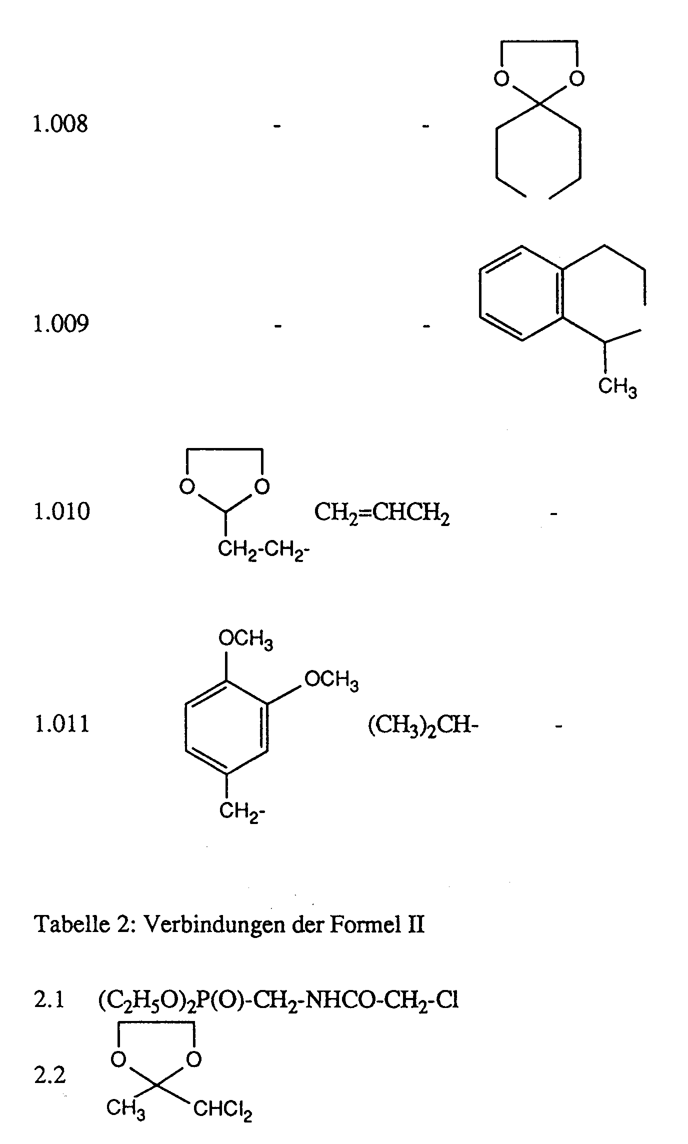

Eine andere Gruppe bevorzugter Verbindungen der Formel II ist jene, worin R ein Rest der Formel 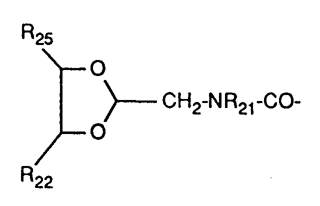 ist, worin R₂₁ Methyl, Ethyl, Propyl, 2-Propenyl oder 2-Butenyl ist, und R₂₂ und R₂₅ Wasserstoff sind. Hiervon ist insbesondere jene Verbindung bevorzugt, worin R₂₁ 2-Propenyl ist.

Bevorzugt sind auch Verbindungen der Formel II, worin R ein Rest der Formel 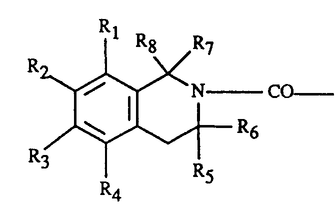 ist, worin R₁ bis R₈ unabhängig voneinander Wasserstoff oder C₁-C₄-Alkyl sind. Insbesondere kommen solche Verbindungen in Betracht, worin
R₁ bis R₇ Wasserstoff sind und R₈ Methyl ist.

In einer anderen Gruppe besonders geeigneter Verbindungen ist R ein Rest der Formel 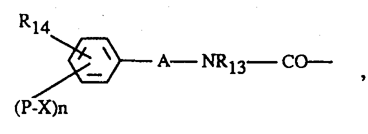 worin R₁₄ Wasserstoff, C₁-C₄-Alkyl oder C₁-C₄-Alkoxy, P C₁-C₄-Alkyl, C₂-C₄-Alkenyl oder C₂-C₄-Alkinyl, X O oder S, n 1, A ein C₁-C₈-Kohlenwasserstoffrest und R₁₃ Wasserstoff oder ein C₁-C₅-Kohlenwasserstoffrest ist. Besonders geeignet hiervon sind jene Verbindungen der Formel II, worin R₁₄ C₁-C₄-Alkoxy, P C₁-C₄-Alkyl, X O, A C₁-C₄-Alkylen und R₁₃ C₁-C₄-Alkyl ist. Die Verbindung mit R₁₄ Methoxy, P Methyl, A Methylen und R₁₃ i-Propyl ist besonders interessant.

Eine weitere Gruppe von bevorzugten Verbindungen der Formel II ist dadurch gekennzeichnet, daß R ein Rest der Formel 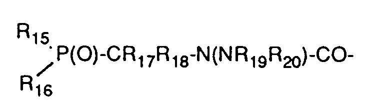 ist, worin R₁₅ und R₁₆ unabhängig voneinander Hydroxyl, C₁-C₄-Alkyl oder C₁-C₄-Alkoxy, R₁₇ und R₁₈ unabhängig voneinander Wasserstoff oder C₁-C₄-Alkyl sind, und R₁₉ Wasserstoff oder ein Rest der Formel -COOR₀₇, worin R₀₇ C₁-C₄-Alkyl ist, und R₂₀ Wasserstoff oder C₁-C₄-Alkyl ist. Besonders bevorzugt sind R₁₆ und R₁₅ C₁-C₄-Alkoxy, R₁₇ und R₁₈ Wasserstoff, R₁₉ ist ein Rest der Formel -COOR₀₇, worin R₀₇ C₁-C₄-Alkyl ist, und R₂₀ Wasserstoff. Der Verbindung, worin R₁₅ und R₁₆ i-Propyloxy und R₁₉ -COOC₂H₅ ist, kommt besondere Bedeutung zu.

Besonders geeignete Mittel sind dadurch gekennzeichnet, daß sie als Verbindung der Formel II eine Verbindung der Formel III 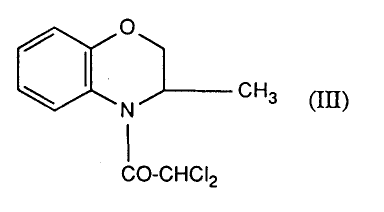 oder der Formel IV 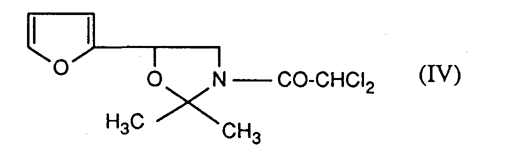 oder der Formel V 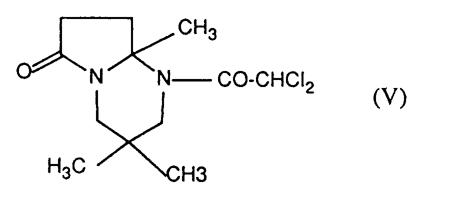 enthalten.

Die erfindungsgemäß verwendete Verbindung der Formel I und ihre Herstellung ist beispielsweise in US-A-5,002,606 beschrieben. Die für die erfindungsgemäßen Mittel verwendeten Verbindungen der Formel II und ihre Herstellung sind beispielsweise aus US-A-4,971,618, US-A-3,959,304, US-A-4,256,481, US-A-4,708,735, EP-A-149 974, EP-A-304 409, EP-A-31686, EP-A-54278, EP-A-23305, US-A-4,846,880, EP-A-143078, EP-A-163607, EP-A-126710 sowie DE-A-2 948 535 bekannt.

Die Erfindung betrifft auch ein Verfahren zum selektiven Bekämpfen von Unkräutem in Nutzpflanzenkulturen, welches darin besteht, daß man die Nutzpflanzen, deren Saatgut wie Samen oder Stecklinge oder deren Anbaufläche gleichzeitig oder unabhängig voneinander mit einer herbizid wirksamen Menge der Verbindung der Formel I und einer herbizid-antagonistisch wirksamen Menge einer Verbindung der Formel II behandelt.

Als Kulturpflanzen, welche durch die Verbindungen der Formel II gegen schädigende Wirkung des oben erwähnten Herbizids geschützt werden können, kommen insbesondere diejenigen in Betracht, die auf dem Nahrungs- oder Textilsektor von Bedeutung sind, beispielsweise Zuckerrohr und insbesondere Kulturhirse und Mais, sowie Reis und andere Getreidearten wie Weizen, Roggen, Gerste und Hafer.

Bei den zu bekämpfenden Unkräutern kann es sich sowohl um monokotyle wie um dikotyle Unkräuter handeln.

Als Anbauflächen gelten die bereits mit den Kulturpflanzen bewachsenen oder mit dem Saatgut dieser Kulturpflanzen beschickten Bodenareale, wie auch die zur Bebauung mit diesen Kulturpflanzen bestimmten Böden.

Ein Safener der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Safener kann daher grundsätzlich unabhängig vom Zeitpunkt der Applikation des Herbizids erfolgen. Die Behandlung der Pflanze kann man jedoch auch durch gleichzeitige Applikation von Herbizid und Safener (z.B. als Tankmischung) vornehmen.

Die zu applizierende Aufwandmenge Safener zu Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Safener zu Herbizid von 1:100 bis 1:1, bevorzugt 1:50 bis 1:10 vor.

In der Regel werden bei der Feldbehandlung 0,001 bis 5,0 kg Safener/ha, vorzugsweise 0,001 bis 0,5 kg Safener/ha, appliziert.

Die Aufwandmenge an Herbizid liegt in der Regel zwischen 0,001 bis 10 kg/ha, vorzugsweise jedoch zwischen 0,005 bis 5 kg/ha.

Die erfindungsgemäßen Mittel sind für alle in der Landwirtschaft üblichen Applikationsmethoden wie z.B. preemergente Applikation, postemergente Applikation und Saatbeizung geeignet.

Bei der Samenbeizung werden im allgemeinen 0,001 bis 10 g Safener/kg Samen, vorzugsweise 0,05 bis 2 g Safener/kg Samen, appliziert. Wird der Safener in flüssiger Form kurz vor der Aussaat unter Samenquellung appliziert, so werden zweckmäßigerweise Safener-Lösungen verwendet, welche den Wirkstoff in einer Konzentration von 1 bis 10000, vorzugsweise von 100 bis 1000 ppm, enthalten.

Zur Applikation werden die Verbindungen der Formel II oder Kombinationen von Verbindungen der Formel II mit den Herbiziden der Formel I zweckmäßigerweise zusammen mit den in der Formulierungstechnik üblichen Hilfsmitteln zu Formulierungen verarbeitet, z.B. zu Emulsionskonzentraten, streichfahigen Pasten, direkt versprühbaren oder verdünnbaren Lösungen, verdünnten Emulsionen, Spritzpulvern, löslichen Pulvern, Stäubemitteln, Granulaten oder Microkapseln.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen. Ferner können zusätzlich oberflächenaktiven Verbindungen (Tenside) bei der Herstellung der Formulierungen verwendet werden.

Als Lösungsmittel können in Frage kommen: Aromatische Kohlenwasserstoffe, bevorzugt die Fraktionen C₈ bis C₁₂, wie z.B. Xylolgemische oder substituierte Naphthaline, Phthalsäureester wie Dibutyl- oder Diocrylphthalat, aliphatische Kohlenwasserstoffe wie Cyclohexan oder Paraffine, Alkohole und Glykole, sowie deren Ether und Ester wie Ethanol, Ethylenglykol, Ethylenglykolmonomethyl- oder ethylether, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenruckstände verwendet werden.

Als oberflächenaktive Verbindungen kommen je nach Safener und gegebenenfalls auch Herbizid nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren (C₁₀-C₂₂), wie z.B. die Na- oder K-Salze der Oel- oder Stearinsäure, oder von natürlichen Fettsäuregemischen, die z.B. aus Kokosnuß-oder Talgöl gewonnen werden können, genannt. Ferner sind auch die Fettsäure-methyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali-oder gegebenenfalls substituierte Ammoniumsalze vor und weisen einen Alkylrest mit 8 bis 22 C-Atomen auf, wobei Alkyl auch den Alkylteil von Acylresten einschließt, z.B. das Na-oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloäliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte and Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside, welche auch in den erfindungsgemäßen Mitteln angewendet werden können, sind u.a. in "Mc Cutcheon's Detergents and Emulsifiers Annual" MC Publishing Corp., Ridgewood New Jersey, 1981; Stache, H., "Tensid-Taschenbuch", Carl Hanser Verlag, München/Wien, 1981; und J. Ash, "Encyclopedia of Surfactants", Vol. I-III, Chemical Publishing Co., New York, 1980-81 beschrieben.

Die agrochemischen Formulierungen enthalten in der Regel 0,1 bis 99 Gewichtsprozent, insbesondere 0,1 bis 95 Gew.-%, Wirkstoff der Formel II oder Wirkstoffgemisch Antidot/Herbizid, 1 bis 99,9 Gew.-%, insbesonder 5 bis 99,8 Gew.-%, eines festen oder flüssigen Formulierungshilfsstoffes und 0 bis 25 Gew.-%, insbesondere 0,1 bis 25 Gew.-%, eines Tensids.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe wie z.B. kommerzielle Chloracetanilide wie Frontier, Metazachlor, Acetochlor, Alachlor, Metolachlor oder Butachlor zur Erzielung spezieller Effekte enthalten.

Für die Verwendung von Verbindungen der Formel II oder sie enthaltender Mittel zum Schützen von Kulturpflanzen gegen schädigende Wirkungen des Herbizids der Formel I kommen verschiedene Methoden und Techniken in Betracht, wie beispielsweise die folgenden:

### i) Samenbeizung

a) Beizung der Samen mit einem als Spritzpulver formulierten Wirkstoff der Formel II durch Schütteln in einem Gefäß bis zur gleichmäßigen Verteilung auf der Samenoberfläche (Trockenbeizung). Man verwendet dabei etwa 1 bis 500 g Wirkstoff der Formel II (4 g bis 2 kg Spritzpulver) pro 100 kg Saatgut.
b) Beizung der Samen mit einem Emulsionskonzentrat des Wirkstoffs der Formel II nach der Methode a) (Naßbeizung).
c) Beizung durch Tauchen des Saatguts in eine Brühe mit 100-1000 ppm Wirkstoff der Formel II während 1 bis 72 Stunden und gegebenenfalls nachfolgendes Trocknen der Samen (Tauchbeizung).

Die Beizung des Saatguts oder die Behandlung des angekeimten Sämlings sind naturgemäß die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

### ii) Applikation aus Tankmischung

Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,01 bis 10 kg pro Hektar beträgt. Solche Tankmischung wird vor oder nach der Aussaat appliziert.

### iii) Applikation in der Saatfurche

Das Antidot wird als Emulsionskonzentrat, Spritzpulver oder als Granulat in die offene besäte Saatfurche eingebracht und hierauf wird nach dem Decken der Saatfurche in normaler Weise das Herbizid im Vorauflaufverfahren appliziert.

### iv) Kontrollierte Wirkstoffabgabe

Der Wirkstoff der Formel II wird in Lösung auf mineralische Granulatträger oder polymerisierte Granulate (Hamstoff/Formaldehyd) aufgezogen und trocknen gelassen. Gegebenenfalls kann ein Überzug aufgebracht werden (Umhüllungsgranulate), der es erlaubt, den Wirkstoff über einen bestimmten Zeitraum dosiert abzugeben.

Die Wirkung der erfindungsgemäßen Mittel wird durch die folgenden Beispiele näher erläutert.

### Formulierungsbeispiele für Mischungen der Verbindung der Formel I mit einem Safener der Formel II (% = Gewichtsprozent)

| F1. Emulsionskonzentrate | a) | b) | c) | d) |
|---|---|---|---|---|
| Wirkstoffmischung | 5 % | 10 % | 25 % | 50 % |
| Ca-Dodecylbenzolsulfonat | 6 % | 8 % | 6 % | 8 % |
| Ricinusöl-polyglykolether (36 Mol EO) | 4 % | - | 4 % | 4 % |
| Octylphenol-polyglykolether (7-8 Mol EO) | - | 4 % | - | 2 % |
| Cyclohexanon | - | - | 10 % | 20 % |
| Aromat. Kohlenwasserstoffgemisch C₉-C₁₂ | 85 % | 78 % | 55 % | 16 % |

Aus solchen Konzentraten können durch Verdünnung mit Wasser Emulsionen jeder gewünschten Konzentration hergestellt werden.

| F2. Lösungen | a) | b) | c) | d) |
|---|---|---|---|---|
| Wirkstoffmischung | 5 % | 10 % | 50 % | 90 % |
| Dipropylenglykol-methylether | - | 20 % | 20 % | - |
| Polyethylenglykol MG 400 | 20 % | 10 % | - | - |
| N-Methyl-2-pyrrolidon | - | - | 30 % | 10 % |
| Aromat. Kohlenwasserstoffgemisch C₉-C₁₂ | 75 % | 60 % | - | - |

Die Lösungen sind zur Anwendung in Form Kleinster Tropfen geeignet.

| F3. Spritzpulver | a) | b) | c) | d) |
|---|---|---|---|---|
| Wirkstoffmischung | 5 % | 25 % | 50 % | 80 % |
| Na-Ligninsulfonat | 4 % | - | 3 % | - |
| Na-Laurylsulfat | 2 % | 3 % | - | 4 % |
| Na-Diisobutyl-naphtalinsulfonat | - | 6 % | 5 % | 6 % |
| Octylphenol-polyglykolether (7-8 Mol EO) | - | 1 % | 2 % | - |
| Hochdisperse Kieselsäure | 1 % | 3 % | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F4. Umhüllungs-Granulate | a) | b) | c) |
|---|---|---|---|
| Wirkstoffmischung | 0.1 % | 5 % | 15 % |
| Hochdisperse Kieselsäure | 0.9 % | 2 % | 2 % |
| Anorg.Trägermaterial (⌀ 0.1 - 1 mm) wie z.B. CaCO₃ oder SiO₂ | 99.0 % | 93 % | 83 % |

Der Wirkstoff wird in Methylenchlorid gelöst, auf den Träger aufgesprüht und das Lösungsmittel anschließend im Vakuum abgedampft.

| F5. Umhüllungs-Granulate | a) | b) | c) |
|---|---|---|---|
| Wirkstoffmischung | 0.1 % | 5 % | 15 % |
| Polyethylenglykol MG 200 | 1.0 % | 2 % | 3 % |
| Hochdisperse Kieselsäure | 0.9 % | 1 % | 2 % |
| Anorg. Trägermaterial (⌀ 0.1 - 1 mm) wie z.B. CaCO₃ oder SiO₂ | 98.0 % | 92 % | 80 % |

Der fein gemahlene Wirkstoff wird in einem Mischer auf das mit Polyethylenglykol angefeuchtete Trägermaterial gleichmäßig aufgetragen. Auf diese Weise erhält man staubfreie Umhüllungs-Granulate.

| F6. Extruder-Granulate | a) | b) | c) | d) |
|---|---|---|---|---|
| Wirkstoffmischung | 0.1 % | 3 % | 5 % | 15 % |
| Na-Ligninsulfonat | 1.5 % | 2 % | 3 % | 4 % |
| Carobxymethylcellulose | 1.4 % | 2 % | 2 % | 2 % |
| Kaolin | 97.0 % | 93 % | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F7. Stäubemittel | a) | b) | c) |
|---|---|---|---|
| Wirkstoffmischung | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und auf einer geeigneten Mühle vermahlen wird.

| F8. Suspensions-Konzentrate | a) | b) | c) | d) |
|---|---|---|---|---|
| Wirkstoffmischung | 3 % | 10 % | 25 % | 50 % |
| Ethylenglykol | 5 % | 5 % | 5 % | 5 % |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2 % | 0.2 % |
| Silikonöl-Emulsion | 0.8 % | 0.8 % | 0.8 % | 0.8 % |
| Wasser | 87 % | 79 % | 62 % | 38 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

### Beispiel B1: Pre-emergente phytotoxische Wirkung des Herbizids der Formel I und der Mischungen Herbizid mit Safener der Formel II auf Mais

In Kunststofftöpfen wird Mais in Standarderde angesät. Unmittelbar nach der Saat werden die Prüfsubstanzen in Form einer wäßrigen Suspension aufgesprüht (500 l Wasser/ha). Diese stellt man aus einer der oben genannten Formulierungen 1. bis 8. her. Die Aufwandmenge an Herbizid der Formel I beträgt 4000, 3000 und 2000 g/ha. Der Safener Nr. 1.006 wird in einem Verhältnis zum Herbizid von 1:18, 1:24 und 1:30 appliziert. Anschließend werden die Testpflanzen im Gewächshaus unter optimalen Bedingungen kultiviert. Nach 22 Tagen Testdauer wird die phytotoxische Wirkung des Herbizids auf den Mais (in Prozent Phytotoxizität) bewertet.

### a) Aufwandmenge Herbizid: 4000 g/ha

| Verhältnis Herbizid zu Safener | % Phytotoxizität |
|---|---|
| kein Safener | 65 |
| 18 : 1 | 20 |
| 24 : 1 | 20 |
| 30 : 1 | 15 |

### b) Aufwandmenge Herbizid: 3000 g/ha

| Verhältnis Herbizid zu Safener | % Phytotoxizität |
|---|---|
| kein Safener | 55 |
| 18 : 1 | 0 |
| 24 : 1 | 0 |
| 30 : 1 | 0 |

### c) Aufwandmenge Herbizid: 2000 g/ha

| Verhältnis Herbizid zu Safener | % Phytotoxizität |
|---|---|
| kein Safener | 25 |
| 18 : 1 | 0 |
| 24 : 1 | 0 |
| 30 : 1 | 0 |

Die Resultate zeigen, daß mit den Verbindungen der Formel II die durch das Herbizid verursachten Schädigungen der Kulturpflanze deutlich reduziert werden können.

## Patentansprüche

1. Mittel zur selektiven Kontrolle von Unkräutern in Kulturen von Nutzpflanzen, dadurch gekennzeichnet, daß es neben inerten Träger- und Zusatzstoffen als Wirkstoff eine Mischung aus
a) einer herbizid wirksamen Menge aRS,1'S(-)N-(1'-Methyl-2'-methoxyethyl)-N-chloracetyl-2-ethyl-6-methylanilin der Formel I 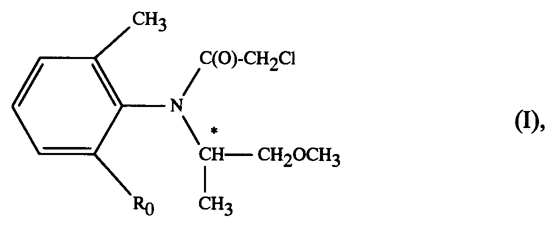 worin R₀ Methyl oder Ethyl bedeutet, und
b) einer herbizid-antagonistisch wirksamen Menge einer Verbindung der Formel II
R-CHYCl (II),
enthält, worin R ein Rest der Formel 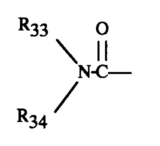 ist, worin
R₃₃ und R₃₄ unabhängig voneinander für C₁-C₆-Alkyl oder C₂-C₆-Alkenyl; oder R₃₃ und R₃₄ zusammen für 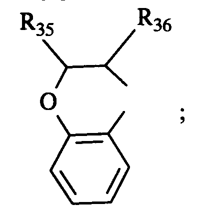 R₃₅ und R₃₆ unabhängig voneinander für Wasserstoff oder C₁-C₆-Alkyl;
oder R₃₃ und R₃₄ zusammen für 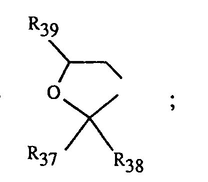 R₃₇ und R₃₈ unabhängig voneinander für C₁-C₄-Alkyl, oder R₃₇ und R₃₈ zusammen für -(CH₂)₅-;
R₃₉ für Wasserstoff, C₁-C₄-Alkyl oder 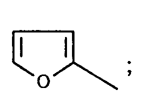 oder R₃₃ und R₃₄ zusammen für 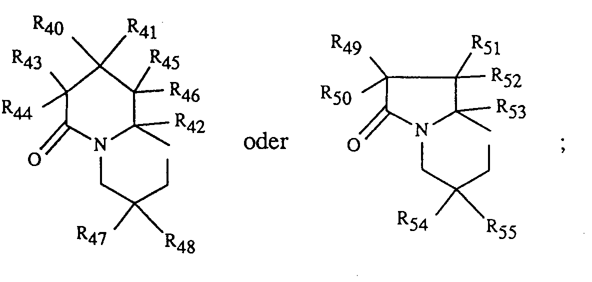 und R₄₀, R₄₁, R₄₂, R₄₃, R₄₄, R₄₅, R₄₆, R₄₇, R₄₈, R₄₉, R₅₀, R₅₁, R₅₂, R₅₃, R₅₄ und R₅₅ unabhängig voneinander für Wasserstoff oder C₁-C₄-Alkyl stehen,
oder R ein Rest der Formel 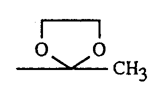 oder der Formel 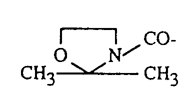 ist,
oder R ein Rest der Formel 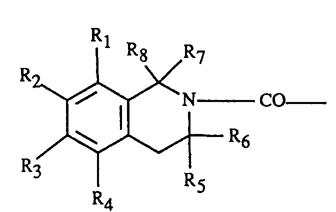 ist, worin R₁, R₂, R₃ und R₄ unabhängig voneinander Wasserstoff, C₁-C₄-Alkyl, C₁-C₄-Alkoxy oder C₁-C₄-Haloalkyl sind, R₅, R₆, R₇ und R₈ unabhängig voneinander Wasserstoff, C₁-C₄-Alkyl oder C₁-C₄-Haloalkyl sind, oder R ein Rest der Formel 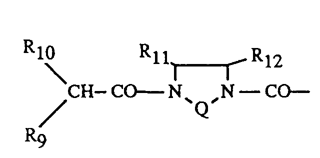 ist, worin R₉ C₁-C₄-Alkyl oder Halogen, R₁₀ Halogen ist, R₁₁ und R₁₂ unabhängig voneinander Wasserstoff oder C₁-C₄-Alkyl sind, und Q C₁-C₄-Alkylen oder älkylsubstituiertes C₁-C₄-Alkylen ist,
oder R ein Rest der Formel 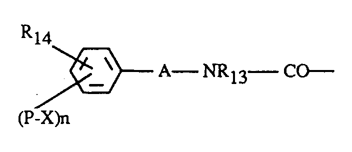 ist, worin R₁₄ Wasserstoff, Halogen, C₁-C₄-Alkyl, Dioxymethylen, C₁-C₄-Alkoxy, C₂-C₄-Alkenyloxy, C₂-C₄-Alkinyloxy oder Cyano-C₁-C₄-Alkyl, P C₁-C₄-Alkyl, C₂-C₄-Alkenyl, C₂-C₄-Alkinyl, C₃-C₈-Cycloalkyl, C₁-C₄-Alkoxy-C₁-C₄-Alkyl, C₂-C₄-Alkenoxy-C₁-C₄-Alkyl, C₂-C₄-Alkinoxy-C₁-C₄-Alkyl, C₁-C₄-Alkyl-thio-C₁-C₄-Alkyl, C₂-C₄-Alkenyl-thio-C₁-C₄-Alkyl, C₂-C₄-Alkinyl-thio-C₁-C₄-Alkyl, C₁-C₄-Alkyl-sulfinyl-C₁-C₄-Alkyl, C₁-C₄-Alkyl-sulfonyl-C₁-C₄-Alkyl, Halogen-C₁-C₄-Alkyl, Cyano-C₁-C₄-Alkyl, 2,2-Di-C₁-C₄-Alkoxy-C₁-C₄-Alkyl, 1,3-Dioxolan-2-yl-C₁-C₄-Alkyl, 1,3-Dioxolan-4-yl-C₁-C₄-Alkyl, 2,2-Di-C₁-C₄-Alkyl-1,3-dioxolan-4-yl-C₁-C₄-Alkyl, 1,3-Dioxan-2yl-C₁-C₄-Alkyl, 2-Benzpyranyl-C₁-C₄-Alkyl, C₁-C₄-Alkoxycarbonyl oder C₂-C₄-Alkenyloxycarbonyl oder Tetrahydrofurfuryl-C₁-C₄-Alkyl, die Gruppe P-X auch Halogen-C₁-C₄-Alkyl, X O, S, SO oder SO₂, n 1,2 oder 3, A ein C₁-C₈-Kohlenwasserstoffrest oder ein mit Alkoxy, Alkylthio, Fluor, Cyano oder Halogenalkyl substituierter C₁-C₈-Kohlenwasserstoffrest, und R₁₃ Wasserstoff, einen C₁-C₅-Kohlenwasserstoffrest, ein mit Alkoxy, poly-Alkoxy, Halogen, Cyano oder Trifluormethyl substituierter C₁-C₅-Kohlenwasserstoffrest, C₃-C₈-Cycloalkyl, C₁-C₄-Alkyl-C₃-C₈-Cycloalkyl, Di-C₁-C₄-Alkoxy-C₁-C₄-Alkyl, 1,3-Dioxolan-2-yl-C₁-C₄-Alkyl, 1,3-Dioxolan-4-yl-C₁-C₄-Alkyl, 1,3-Dioxan-2-yl-C₁-C₄-Alkyl, Furyl-C₁-C₄-Alkyl, Tetrahydrofuryl-C₁-C₄-Alkyl oder ein Rest der Formel -NHCO₂R₀₁, -CH₂CO₂R₀₁, -CH(CH₃)CO₂R₀₁ oder -CH(R₀₂)-C(R₀₃)=NOR₀₄ ist, worin R₀₁ Methyl, Ethyl, Propyl, Isopropyl oder Allyl ist, R₀₂ und R₀₃ jeweils Wasserstoff oder C₁-C₄-Alkyl sind und R₀₄ Wasserstoff, C₁-C₄-Alkyl, C₂-C₄-Alkenyl oder C₂-C₄-Alkinyl ist,
oder R ein Rest der Formel (H₅C₂O)₂P(O)CH₂NHCO- oder 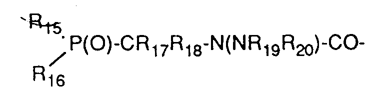 ist, worin R₁₅ und R₁₆ unabhängig voneinander Hydroxyl, C₁-C₄-Alkyl, Aryl, C₁-C₄-Alkoxy, C₂-C₄-Alkenyloxy, C₂-C₄-Alkinyloxy, C₂-C₄-Halogenalkoxy, C₂-C₈-Alkoxyalkoxy, C₁-C₄-Cyanoalkoxy, C₁-C₄-Phenylalkoxy oder Aryloxy oder mit Halogen, Cyano, Nitro oder C₁-C₄-Alkoxy substituiertes Aryloxy sind, R₁₇ Wasserstoff, C₁-C₄-Alkyl oder Phenyl oder Phenyl substituiert mit Halogen, Cyano, Nitro oder C₁-C₄-Alkoxy, R₁₈ Wasserstoff oder C₁-C₄-Alkyl, R₁₉ Wasserstoff oder einen Rest der Formel -COCX₁X₂-R₀₆ oder einen mit Halogen substituierten Alkenoylrest mit 2 bis 4 Kohlenstoffatomen im Alkenylteil ist, worin X₁ und X₂ unabhängig voneinander Wasserstoff oder Halogen sind, oder ein Rest der Formel -COOR₀₇ oder -COR₀₈ oder ein C₁-C₄-Alkyl-, C₂-C₄-Alkenyl- oder C₁-C₄-Phenylalkylrest ist, der am Phenylring mit Halogen, Cyano, Nitro oder C₁-C₄-Alkoxy substituiert sein kann, und R₂₀ Wasserstoff, C₁-C₄-Alkyl, C₂-C₄-Alkenyl oder C₂-C₄-Alkinyl ist, R₀₆ Wasserstoff, Halogen oder C₁-C₆-Alkyl, R₀₇ C₁-C₄-Alkyl, C₁-C₄-Phenylalkyl oder mit Halogen, Cyano, Nitro oder C₁-C₄-Alkoxy im Phenylteil substituiertes C₁-C₄-Phenylalkyl und R₀₈ C₁-C₄-Alkyl, C₂-C₄-Alkenyl, C₂-C₄-Alkinyl, Phenyl, C₁-C₄-Phenylalkyl oder mit Halogen, Cyano, Nitro oder C₁-C₄-Alkoxy im Phenylteil substituiertes C₁-C₄-Phenylalkyl ist,
oder R ein Rest der Formel 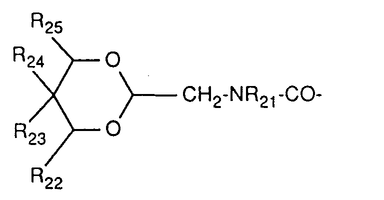 oder der Formel 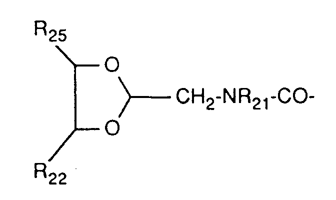 ist, worin R₂₁ Methyl, Ethyl, Propyl, 1-Methylethyl, 2-Propenyl, 2-Butenyl, 1,1-Dimethyl-2-propenyl, 2-Propinyl oder 2-Methyl-2-propinyl ist, und R₂₂, R₂₃, R₂₄ und R₂₅ unabhängig voneinander Wasserstoff oder Methyl sind, und Y Chlor ist, oder
Y Wasserstoff ist, wenn R ein Rest der Formel (H₅C₂O)₂P(O)CH₂NHCO- ist.

2. Mittel nach Anspruch 1, dadurch gekennzeichnet, daß R ein Rest der Formel 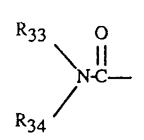 ist, worin R₃₃ und R₃₄ zusammen für 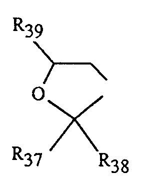 stehen;
R₃₇ und R₃₈ unabhängig voneinander für C₁-C₄-Alkyl, oder R₃₇ und R₃₈ zusammen für -(CH₂)₅- stehen; und
R₃₉ für Wasserstoff, C₁-C₄-Alkyl oder 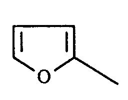 steht.

3. Mittel nach Anspruch 1, dadurch gekennzeichnet, daß R ein Rest der Formel 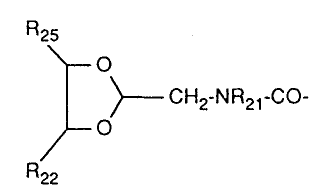 ist, worin R₂₁ Methyl, Ethyl, Propyl, 2-Propenyl oder 2-Butenyl ist und R₂₂ und R₂₅ Wasserstoff sind.

4. Mittel nach Anspruch 3, dadurch gekennzeichnet, daß R₂₁ 2-Propenyl ist.

5. Mittel nach Anspruch 1, dadurch gekennzeichnet, daß R ein Rest der Formel 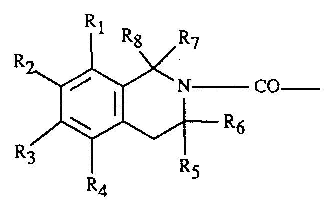 ist, worin R₁ bis R₈ unabhängig voneinander Wasserstoff oder C₁-C₄-Alkyl sind.

6. Mittel nach Anspruch 5, dadurch gekennzeichnet, daß R₁ bis R₇ Wasserstoff sind und R₈ Methyl ist.

7. Mittel nach Anspruch 1, dadurch gekennzeichnet, daß R ein Rest der Formel 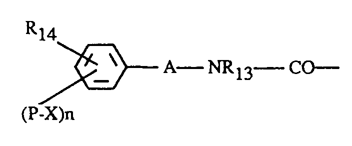 ist, worin R₁₄ Wasserstoff, C₁-C₄-Alkyl oder C₁-C₄-Alkoxy, P C₁-C₄-Alkyl, C₂-C₄-Alkenyl oder C₂-C₄-Alkinyl, X O oder S, n 1, A ein C₁-C₈-Kohlenwasserstoffrest und R₁₃ Wasserstoff oder ein C₁-C₅-Kohlenwasserstoffrest ist.

8. Mittel nach Anspruch 7, dadurch gekennzeichnet, daß R₁₄ C₁-C₄-Alkoxy, C₁-C₄-Alkyl, X O, A C₁-C₄-Alkylen und R₁₃ C₁-C₄-Alkyl ist.

9. Mittel nach Anspruch 8, dadurch gekennzeichnet, daß R₁₄ Methoxy, P Methyl, A Methylen und R₁₃ i-Propyl ist.

10. Mittel nach Anspruch 1, dadurch gekennzeichnet, daß R ein Rest der Formel 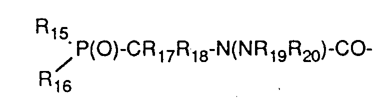 ist, worin R₁₅ und R₁₆ unabhängig voneinander Hydroxyl, C₁-C₄-Alkyl oder C₁-C₄-Alkoxy, R₁₇ und R₁₈ unabhängig voneinander Wasserstoff oder C₁-C₄-Alkyl sind, und R₁₉ Wasserstoff oder ein Rest der Formel -COOR₀₇, worin R₀₇ C₁-C₄-Alkyl ist, und R₂₀ Wasserstoff oder C₁-C₄-Alkyl ist.

11. Mittel nach Anspruch 10, dadurch gekennzeichnet, daß R₁₆ und R₁₅ C₁-C₄-Alkoxy, R₁₇ und R₁₈ Wasserstoff sind, R₁₉ ein Rest der Formel -COOR₀₇, worin R₀₇ C₁-C₄-Alkyl ist, und R₂₀ Wasserstoff ist.

12. Mittel nach Anspruch 11, dadurch gekennzeichnet, daß R₁₅ und R₁₆ i-Propyloxy und R₁₉ -COOC₂H₅ ist.

13. Mittel nach Anspruch 1, dadurch gekennzeichnet, daß es als Verbindung der Formel II eine Verbindung der Formel III 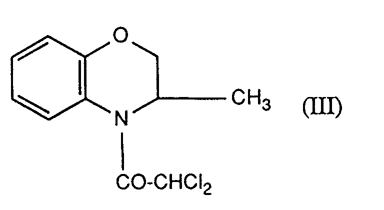 oder der Formel IV 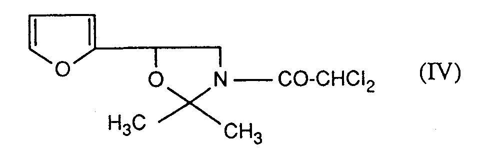 oder der Formel V 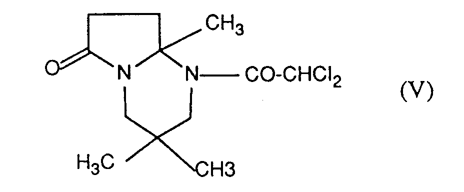 enthält.

14. Verfahren zum selektiven Bekämpfen von Unkräutern und Gräsern in Nutzpflanzenkulturen, dadurch gekennzeichnet, daß man die Kulturen, deren Saatgut oder deren Anbaufläche gleichzeitig oder unabhängig voneinander mit einer wirksamen Menge eines Herbizides der Formel I gemäß Anspruch 1 und einer herbizid-antagonistisch wirksamen Menge einer Verbindung der Formel II gemäß Anspruch 1 behandelt.

15. Verfahren gemäß Anspruch 14, dadurch gekennzeichnet, daß man Kulturpflanzenbestände oder Anbauflächen für Kulturpflanzen mit 0,001 bis 10 kg/ha einer Verbindung der Formel I gemäß Anspruch 1 und einer Menge von 0,005 bis 0,5 kg/ha einer Verbindung der Formel II gemäß Anspruch 1 behandelt.

16. Verfahren gemäß Anspruch 14 zum selektiven Bekämpfen von Unkräutern und Gräsern in Maiskulturen.

## Claims

1. A composition for the selective control of weeds in crops of cultivated plants, characterised in that in addition to inert carriers and adjuvants, it contains as active ingredient a mixture of
a) a herbicidally effective amount of aRS,1'S(-)N-(1'-methyl-2'-methoxyethyl)-N-chloracetyl-2-ethyl-6-methylaniline of formula I 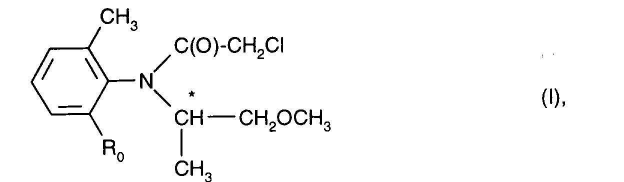 wherein R₀ is methyl or ethyl, and
b) to antagonise the herbicide an effective amount of a compound of formula II
R-CHYCl (II)
wherein R is a radical of formula 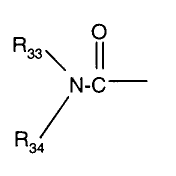 wherein
R₃₃ and R₃₄ independently of one another are C₁-C₆-alkyl or C₂-C₆-alkenyl; or R₃₃ and R₃₄ together are 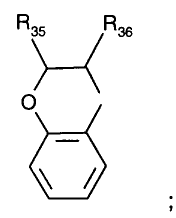
R₃₅ and R₃₆ independently of one another are hydrogen or C₁-C₆-alkyl; or R₃₃ and R₃₄ together are 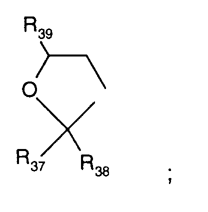
R₃₇ and R₃₈ independently of one another are C₁-C₄-alkyl, or R₃₇ and R₃₈ together are -(CH₂)₅-; R₃₉ is hydrogen, C₁-C₄-alkyl, or 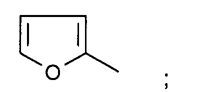 or R₃₃ and R₃₄ together are 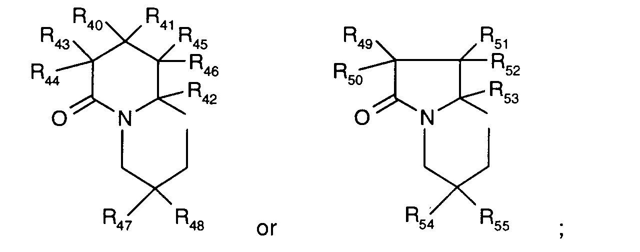 and R₄₀, R₄₁, R₄₂, R₄₃, R₄₄, R₄₅, R₄₆, R₄₇, R₄₈, R₄₉, R₅₀, R₅₁, R₅₂, R₅₃, R₅₄ and R₅₅, independently of one another, are hydrogen or C₁-C₄-alkyl,
or R is a radical of formula 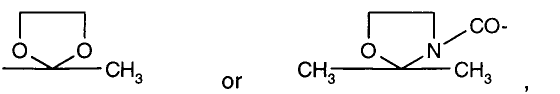 or R is a radical of formula 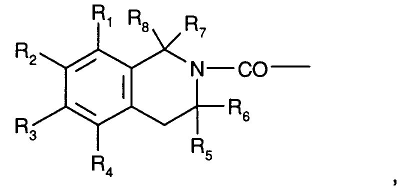 wherein R₁, R₂, R₃ and R₄, independently of one another, are hydrogen, C₁-C₄-alkyl, C₁-C₄-alkoxy or C₁-C₄-haloalkyl, R₅, R₆, R₇ and R₈ independently of one another, are hydrogen, C₁-C₄-alkyl or C₁-C₄-haloalkyl, or R is a radical of formula 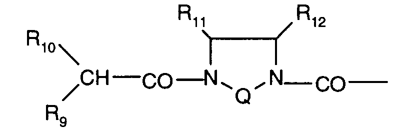 wherein R₉ is C₁-C₄-alkyl or halogen, R₁₀ is halogen, R₁₁ and R₁₂ independently of one another, are hydrogen or C₁-C₄-alkyl, and Q is C₁-C₄-alkylene or alkyl-substituted C₁-C₄-alkylene,
or R is a radical of formula 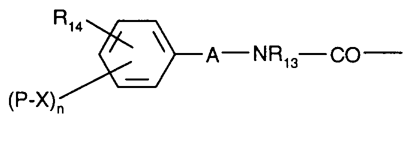 wherein R₁₄ is hydrogen, halogen, C₁-C₄-alkyl, dioxymethylene, C₁-C₄-alkoxy, C₂-C₄-alkenyloxy, C₂-C₄-alkinyloxy or cyano-C₁-C₄-alkyl, P is C₁-C₄-alkyl, C₂-C₄-alkenyl, C₂-C₄-alkinyl, C₃-C₈-cycloalkyl, C₁-C₄-alkoxy-C₁-C₄-alkyl, C₂-C₄-alkenoxy-C₁-C₄-alkyl, C₂-C₄-alkinoxy-C₁-C₄-alkyl, C₁-C₄-alkyl-thio-C₁-C₄-alkyl, C₂-C₄-alkenyl-thio-C₁-C₄-alkyl, C₂-C₄-alkinyl-thio-C₁-C₄-alkyl, C₁-C₄-alkyl-sulphinyl-C₁-C₄-alkyl, C₁-C₄-alkyl-sulphonyl-C₁-C₄-alkyl, halogen-C₁-C₄-alkyl, cyano-C₁-C₄-alkyl, 2,2-di-C₁-C₄-alkoxy-C₁-C₄-alkyl, 1,3-dioxolan-2-yl-C₁-C₄-alkyl, 1,3-dioxolan-4-yl-C₁-C₄-alkyl, 2,2-di-C₁-C₄-alkyl-1,3-dioxolan-4-yl-C₁-C₄-alkyl, 1,3-dioxan-2-yl-C₁-C₄-alkyl, 2-benzpyranyl-C₁-C₄-alkyl, C₁-C₄-alkoxycarbonyl or C₂-C₄-alkenyloxycarbonyl or tetrahydrofurfuryl-C₁-C₄-alkyl, the group P-X is also halogen-C₁-C₄-alkyl, X is O, S, SO or SO₂, n is 1,2 or 3, A is a C₁-C₈-hydrocarbon radical or a C₁-C₈-hydrocarbon radical which is substituted by alkoxy, alkylthio, fluorine, cyano or haloalkyl, and R₁₃ is hydrogen, a C₁-C₅-hydrocarbon radical, a C₁-C₅-hydrocarbon radical which is substituted by alkoxy, poly-alkoxy, halogen, cyano or trifluoromethyl; C₃-C₈-cycloalkyl, C₁-C₄-alkyl-C₃-C₈-cycloalkyl, di-C₁-C₄-alkoxy-C₁-C₄-alkyl, 1,3-dioxolan-2-yl-C₁-C₄-alkyl, 1,3-dioxolan-4-yl-C₁-C₄-alkyl, 1,3-dioxan-2-yl-C₁-C₄-alkyl, furyl-C₁-C₄-alkyl, tetrahydrofuryl-C₁-C₄-alkyl or a radical of formula -NHCO₂R₀₁, -CH₂CO₂R₀₁, -CH(CH₃)CO₂R₀₁ or -CH(R₀₂)-C(R₀₃)=NOR₀₄, wherein R₀₁ is methyl, ethyl, propyl, isopropyl or allyl, R₀₂ and R₀₃ are respectively hydrogen or C₁-C₄-alkyl and R₀₄ is hydrogen, C₁-C₄-alkyl, C₂-C₄-alkenyl or C₂-C₄-alkinyl,
or R is a radical of formula (H₅C₂O)₂P(O)CH₂NHCO- or 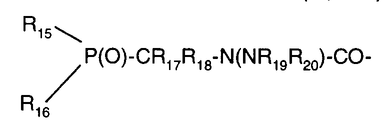 wherein R₁₅ and R₁₆, independently of one another, are hydroxyl, C₁-C₄-alkyl, aryl, C₁-C₄-alkoxy, C₂-C₄-alkenyloxy, C₂-C₄-alkinyloxy, C₂-C₄-haloalkoxy, C₂-C₈-alkoxyalkoxy, C₁-C₄-cyanoalkoxy, C₁-C₄-phenylalkoxy or aryloxy or aryloxy which is substituted by halogen, cyano, nitro or C₁-C₄-alkoxy, R₁₇ is hydrogen, C₁-C₄-alkyl or phenyl or phenyl which is substituted by halogen, cyano, nitro or C₁-C₄-alkoxy, R₁₈ is hydrogen or C₁-C₄-alkyl, R₁₉ is hydrogen or a radical of formula -COCX₁X₂-R₀₆, or an alkenoyl radical with 2 to 4 carbon atoms in the alkenyl moiety which is substituted by halogen, wherein X₁ and X₂ independently of one another are hydrogen or halogen, or is a radical of formula -COOR₀₇ or -COR₀₈ or a C₁-C₄-alkyl, C₂-C₄-alkenyl or C₁-C₄-phenylalkyl radical which may be substituted at the phenyl ring by halogen, cyano, nitro or C₁-C₄-alkoxy, and R₂₀ is hydrogen, C₁-C₄-alkyl, C₂-C₄-alkenyl or C₂-C₄-alkinyl, R₀₆ is hydrogen, halogen or C₁-C₆-alkyl, R₀₇ is C₁-C₄-alkyl, C₁-C₄-phenylalkyl or C₁-C₄-phenylalkyl which is substituted in the phenyl moiety by halogen, cyano, nitro or C₁-C₄-alkoxy, and R₀₈ is C₁-C₄-alkyl, C₂-C₄-alkenyl, C₂-C₄-alkinyl, phenyl, C₁-C₄-phenyl-alkyl or C₁-C₄-phenylalkyl which is substituted in the phenyl moiety by halogen, cyano, nitro or C₁-C₄-alkoxy, or R is a radical of formula 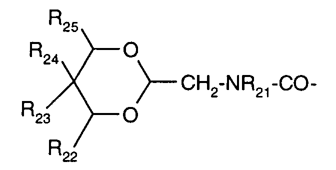 or of formula 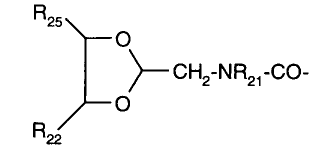 wherein R₂₁ is methyl, ethyl, propyl, 1 -methylethyl, 2-propenyl, 2-butenyl, 1,1 -dimethyl-2-propenyl, 2-propinyl or 2-methyl-2-propinyl, and R₂₂, R₂₃, R₂₄ and R₂₅, independently of one another, are hydrogen or methyl, and Y is chlorine, or
Y is hydrogen if R is a radical of formula (H₅C₂O)₂P(O)CH₂NHCO-.

2. A composition according to claim 1, characterised in that R is a radical of formula 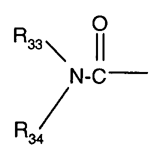 wherein R₃₃ and R₃₄ together are 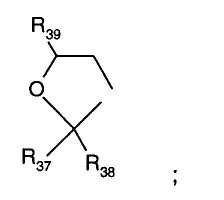 R₃₇ and R₃₈ independently of one another are C₁-C₄-alkyl, or R₃₇ and R₃₈ together are -(CH₂)₅-; and R₃₉ is hydrogen, C₁-C₄-alkyl, 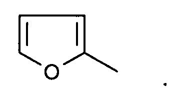 or

3. A composition according to claim 1, characterised in that R is a radical of formula 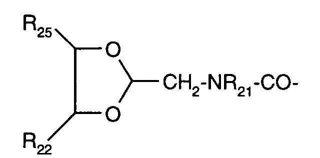 wherein R₂₁ is methyl, ethyl, propyl, 2-propenyl or 2-butenyl, and R₂₂ and R₂₅ are hydrogen.

4. A composition according to claim 3, characterised in that R₂₁ is 2-propenyl.

5. A composition according to claim 1, characterised in that R is a radical of formula 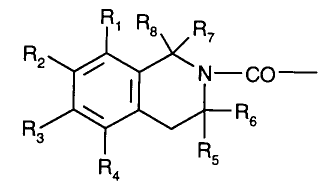 wherein R₁ to R₈ independently of one other are hydrogen or C₁-C₄-alkyl.

6. A composition according to claim 5, characterised in that R₁ to R₇ are hydrogen and R₈ is methyl.

7. A composition according to claim 1, characterised in that R is a radical of formula 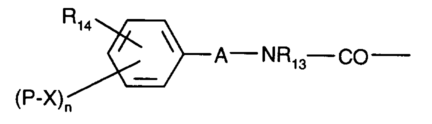 wherein R₁₄ is hydrogen, C₁-C₄-alkyl or C₁-C₄-alkoxy, P is C₁-C₄-alkyl, C₂-C₄-alkenyl or C₂-C₄-alkinyl, X is O or S, n is 1, A is a C₁-C₈-hydrocarbon radical and R₁₃ is hydrogen or a C₁-C₅-hydrocarbon radical.

8. A composition according to claim 7, characterised in that R₁₄ is C₁-C₄-alkyl, P is C₁-C₄-alkyl, X is O, A is C₁-C₄-alkylene and R₁₃ is C₁-C₄-alkyl.

9. A composition according to claim 8, characterised in that R₁₄ is methoxy, P is methyl, A is methylene and R₁₃ is isopropyl.

10. A composition according to claim 1, characterised in that R is a radical of formula 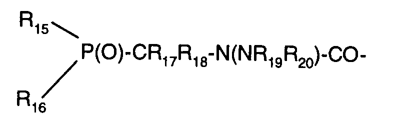 wherein R₁₅ and R₁₆, independently of one another, are hydroxyl, C₁-C₄-alkyl or C₁-C₄-alkoxy, R₁₇ and R₁₈, independently of one another, are hydrogen or C₁-C₄-alkyl, and R₁₉ is hydrogen or a radical of formula -COOR₀₇, wherein R₀₇ is C₁-C₄-alkyl, and R₂₀ is hydrogen or C₁-C₄-alkyl.

11. A composition according to claim 10, characterised in that R₁₆ and R₁₅ are C₁-C₄-alkoxy, R₁₇ and R₁₈ are hydrogen, R₁₉ is a radical of formula -COOR₀₇, wherein R₀₇ is C₁-C₄-alkyl, and R₂₀ is hydrogen.

12. A composition according to claim 11, characterised in that R₁₅ and R₁₆ are isopropyloxy and R₁₉ is -COOC₂H₅.

13. A composition according to claim 1, characterised in that it contains as the compound of formula II a compound of formula III 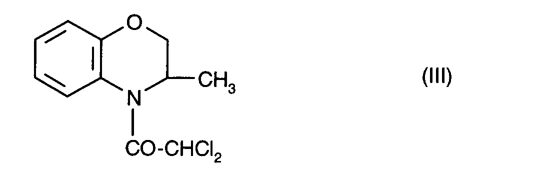 or of formula IV 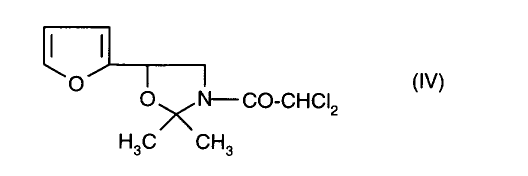 or of formula V

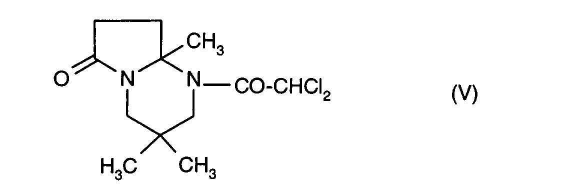

14. A method of selectively controlling weeds and grasses in crops of cultivated plants, characterised by treating the cultivated plants, their seeds or the crop area thereof, concurrently or separately, with an effective amount of a herbicide of formula I according to claim 1, and to antagonise the herbicide, an effective amount of a compound of formula II according to claim 1.

15. A method according to claim 14, characterised by treating crops of cultivated plants or areas intended for cropping with cultivated plants with 0.001 to 10 kg/ha of a compound of formula I according to claim 1 and an amount of 0.005 to 0.5 kg/ha of a compound of formula II according to claim 1.

16. A method according to claim 14 of selectively controlling weeds and grasses in crops of maize.

## Revendications

1. Un agent pour la lutte sélective contre les mauvaises herbes dans les cultures de plantes utiles, caractérisé en ce que, outre des supports et des additifs inertes, il contient, comme matière active, un mélange constitué
a) d'une quantité efficace du point du vue herbicide de la aRS, 1'S(-)N-(1'-méthyl-2'-méthoxyéthyl)-N-chloroacétyl-2-éthyl-6-méthylaniline de formule I 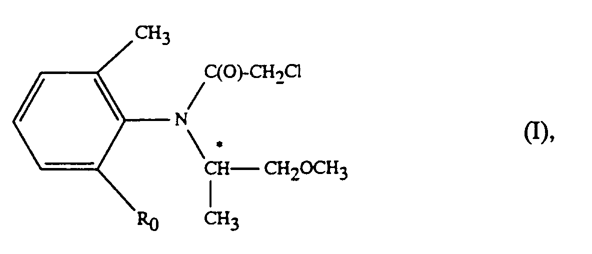 où R₀ signifie un groupe méthyle ou éthyle, et
b) d'une quantité efficace comme antagoniste du point de vue herbicide d'un composé de formule II
R-CHYCl (II),
où R signifie un reste de formule 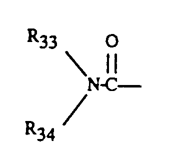 où
R₃₃ et R₃₄ signifient indépendamment l'un de l'autre un groupe C₁-C₆-alkyle ou
C₂-C₆-alcényle; ou bien R₃₃ et R₃₄ signifient ensemble 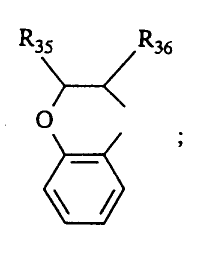 R₃₅ et R₃₆ signifient indépendamment l'un de l'autre l'hydrogène ou un groupe C₁-C₆-alkyle;
ou bien R₃₃ et R₃₄ signifient ensemble 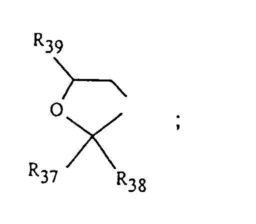 R₃₇ et R₃₈ signifient indépendamment l'un de l'autre un groupe C₁-C₄-alkyle ou bien R₃₇ et R₃₈ signifient ensemble -(CH₂)₅-;
R₃₉ signifie l'hydrogène, un groupe C₁-C₄-alkyle 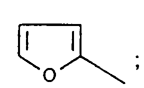 ou ou bien R₃₃ et R₃₄ signifient ensemble 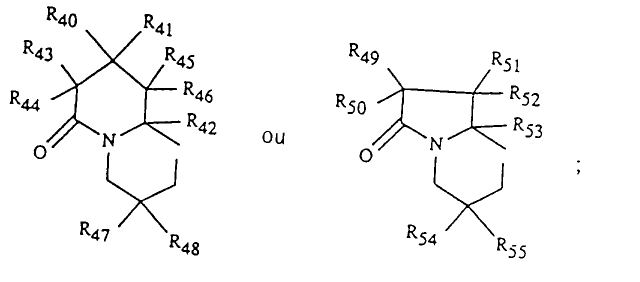 et R₄₀, R₄₁, R₄₂, R₄₃, R₄₄, R₄₅, R₄₆, R₄₇, R₄₈, R₄₉, R₅₀, R₅₁, R₅₂, R₅₃, R₅₄ et R₅₅ signifient indépendamment les uns des autres l'hydrogène ou un groupe C₁-C₄-alkyle,
ou bien R signifie un reste de formule 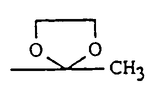 ou de formule 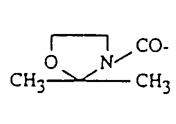 ou bien R signifie un reste de formule 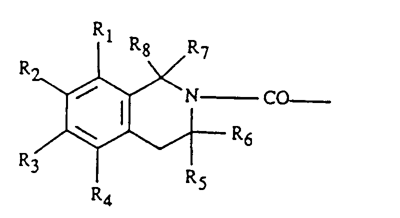 où R₁, R₂, R₃ et R₄ signifient indépendamment les uns des autres l'hydrogène, un groupe C₁-C₄-alkyle, C₁-C₆-alcoxy ou bien C₁-C₄-haloalkyle, R₅, R₆, R₇ et R₈ signifient indépendamment les uns des autres l'hydrogène, un groupe C₁ - C₄-alkyle ou C₁-C₄-haloalkyle, ou bien R signifie un reste de formule 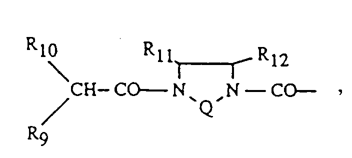 où R₉ signifie un groupe C₁-C₄-alkyle ou un halogène, R₁₀ signifie un halogène, R₁₁ et R₁₂ signifient indépendamment l'un de l'autre l'hydrogène ou un groupe C₁-C₄-alkyle, et Q signifie un groupe C₁-C₄-alkylène ou C₁-C₄-alkylène substitué par un groupe alkyle,
ou bien R signifie un reste de formule 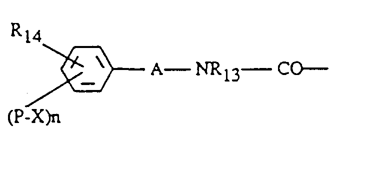 où R₁₄ signifie l'hydrogène, un halogène, un groupe C₁-C₄-alkyle, dioxyméthylène, C₁-C₄-alcoxy, C₂-C₄-alcényloxy, C₂-C₄-alcynyloxy ou cyano-C₁-C₄-alkyle, P signifie un groupe C₁-C₄-alkyle, C₂-C₄-alcényle, C₂-C₄-alcynyle, C₃-C₈-cycloalkyle, C₁-C₄-alcoxy-C₁-C₄-alkyle, C₂-C₄-alcénoxy-C₁-C₄-alkyle, C₂-C₄-alcynoxy-C₁-C₄-alkyle, C₁-C₄-alkyl-thio-C₁-C₄-alkyle, C₂-C₄-alcényl-thio-C₁-C₄-alkyle, C₂-C₄-alcynyl-thio-C₁-C₄-alkyle, C₁-C₄-alkyl-sulfinyl-C₁-C₄-alkyle, C₁-C₄-alkyl-sulfonyl-C₁-C₄-alkyle, halogène-C₁-C₄-alkyle, cyano-C₁-C₄-alkyle, 2,2-di-C₁-C₄-alcoxy-C₁-C₄-alkyle, 1,3-dioxolan-2-yl-C₁-C₄-alkyle, 1,3-dioxolan-4-yl-C₁-C₄-alkyle, 2,2-di-C₁-C₄-alkyl-1,3-dioxolan-4-yl-C₁-C₄alkyle, 1,3-dioxan-2-yl-C₁-C₄-alkyle, 2-benzopyranyl-C₁-C₄-alkyle, C₁-C₄-alcoxycarbonyle ou bien C₂-C₄-alcényloxycarbonyle ou bien tétrahydrofurfuryl-C₁-C₄-alkyle, le groupe P-X signifie également un groupe halogène-C₁ -C₄-alkyle, X signifie O, S, SO ou SO₂, n signifie 1, 2 ou 3, A signifie un reste d'hydrocarbure en C₁-C₈ ou bien un reste d'hydrocarbure en C₁-C₈ substitué par un groupe alcoxy, alkylthio, le fluor , cyano ou halogénealkyle, et R₁₃ signifie l'hydrogène, un reste d'hydrocarbure en C₁-C₅, un reste d'hydrocarbure en C₁-C₅ substitué par un groupe alcoxy, poly-alcoxy, un halogène, cyano ou trifluorométhyle, C₃-C₈-cyclo-alkyle, C₁-C₄-alkyl-C₃-C₈-cycloalkyle, di-C₁-C₄-alcoxy-C₁-C₄-alkyle, 1,3-dioxolan-2-yl-C₁-C₄-alkyle, 1,3-dioxolan-4-yl-C₁-C₄-alkyle, 1,3-dioxan-2-yl-C₁-C₄-alkyle, furylC₁-C₄-alkyle, tétrahydrofuryl-C₁-C₄-alkyle ou bien un reste de formule -NH-CO₂R₀₁, -CH₂CO₂R₀₁, -CH(CH₃)CO₂R₀₁ ou bien -CH(R₀₂)-C(R₀₃)=NOR₀₄, où R₀₁ signifie un groupe méthyle, éthyle, propyle, isopropyle ou allyle, R₀₂ et R₀₃ signifient chacun l'hydrogène ou un groupe C₁-C₄-alkyle et R₀₄ signifie l'hydrogène, un groupe C₁-C₄-alkyle, C₂-C₄-alcényle ou C₂-C₄-alcynyle,
ou bien R signifie un reste de formule (H₅C₂O)₂P(O)CH₂NHCO- ou bien 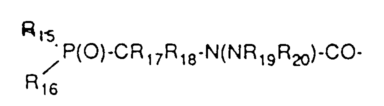 ,où R₁₅ et R₁₆ signifient indépendamrnent l'un de l'autre un groupe hydroxy, C₁-C₄-alkyle, aryle, C₁-C₄-alcoxy, C₂-C₄-alcénvloxy, C₂-C₄-alcynyloxy, C₂-C₄-halogènealcoxy, C₂-C₈-alcoxyalcoxy, C₁-C₄-cyanoalcoxy, C₁-C₄-phénylalcoxy ou aryloxy ou bien un groupe aryloxy substitué par un halogène, un groupe cyano, nitro ou bien C₁-C₄-alcoxy, R₁₇ signifie l'hydrogène, un groupe C₁-C₄-alkyle ou phényle ou bien phényle substitué par un halogène, un groupe cyano, nitro ou C₁-C₄-alcoxy, R₁₈ signifie l'hydrogène ou un groupe C₁-C₄-alkyle, R₁₉ signifie l'hydrogène ou un reste de formule -COCX₁X₂-R₀₆ ou bien un reste alcénoyle substitué par un halogène ayant de 2 à 4 atomes de carbone dans la partie alcényle, où X₁ et X₂ signifient indépendamment l'un de l'autre l'hydrogène ou un halogène, ou bien un reste de formule -COOR₀₇ ou -COR₀₈ ou bien un reste C₁-C₄-alkyl-, C₁-C₄-alcényl-ou C₁-C₄-phénylalkyle qui peut être substitué sur le cycle phényle par un halogène, un groupe cyano, nitro ou C₁-C₄-alcoxy, et R₂₀ signifie l'hydrogène, un groupe C₁-C₄-alkyle, C₂-C₄-alcényle ou C₂-C₄-alcynyle, R₀₆ signifie l'hydrogène, un halogène ou un groupe C₁-C₆-alkyle, R₀₇ signifie un groupe C₁-C₄-alkyle, C₁-C₄-phénylalkyle ou C₁-C₄-phénylalkyle substitué dans la partie phényle par un halogène, un groupe cyano, nitro ou C₁-C₄-alcoxy, et R₀₈ signifie un groupe C₁-C₄-alkyle, C₂-C₄-alcényle, C₂-C₄-alcynyle, phényle, C₁-C₄-phénylalkyle ou bien un groupe C₁-C₄-phénylalkyle substitué dans la partie phényle par un halogène, un groupe cyano, nitro ou C₁-C₄-alcoxy, ou bien R signifie un reste de formule 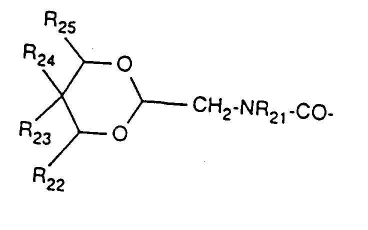 ou de formule 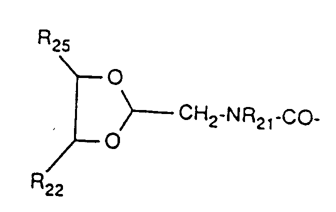 où R₂₁ signifie un groupe méthyle, éthyle, propyle, 1-méthyléthyle, propène-2-yle, butène-2-yle, 1,1-diméthylpropène-2-yle, propyne-2-yle ou bien 2-méthyl-propyne-2-yle, et R₂₂, R₂₃, R₂₄ et R₂₅ signifient indépendamment les uns des autres l'hydrogène ou un groupe méthyle, et Y signifie le chlore, ou bien
Y signifie l'hydrogène, lorsque R signifie un reste de formule
(H₅C₂O)₂P(O)CH₂NHCO-.

2. Un agent selon la revendication 1, caractérisé en ce que R signifie un reste de formule 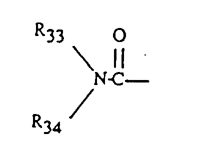 où R₃₃ et R₃₄ signifient ensemble 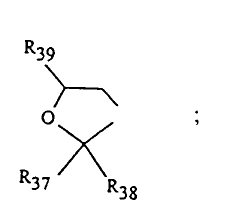 R₃₇ et R₃₈ signifient indépendamment l'un de l'autre un groupe C₁-C₄-alkyle, ou bien R₃₇ et R₃₈ signifient ensemble -(CH₂)₅-; et
R₃₉ signifie l'hydrogène, un groupe C₁-C₄-alkyle 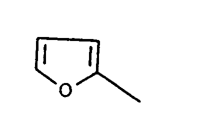 ou

3. Un agent selon la revendication 1, caractérisé en ce que R signifie un reste de formule 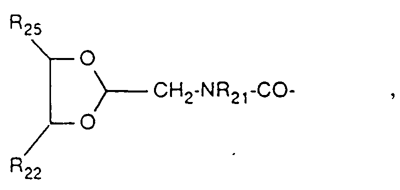 où R₂₁ signifie un groupe méthyle, éthyle propyle, propène-2-yle ou butène-2-yle et R₂₂ et R₂₅ signifient l'hydrogène.

4. Un agent selon la revendication 3, caractérisé en ce que R₂₁ signifie un groupe propène-2-yle.

5. Un agent selon la revendication 1, caractérisé en ce que R signifie un reste de formule 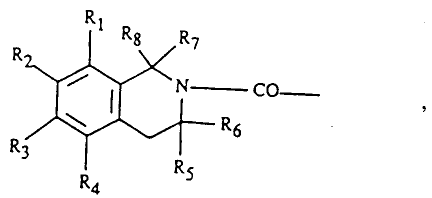 où R₁ à R₈ signifient indépendamment les uns des autres l'hydrogène ou un groupe C₁-C₄-alkyle.

6. Un agent selon la revendication 5, caractérisé en ce que R₁ à R₇ signifient l'hydrogène et R₈ signifie un groupe méthyle.

7. Un agent selon la revendication 1, caractérisé en ce que R signifie un reste de formule 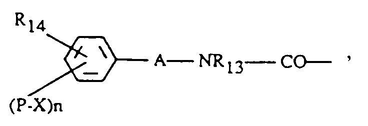 où R₁₄ signifie l'hydrogène, un groupe C₁-C₄-alkyle ou C₁-C₄-alcoxy, P signifie un groupe C₁-C₄-alkyle, C₂-C₄-alcényle ou C₂-C₄-alcynyle. X signifie O ou S, n signifie 1, A signifie un reste d'hydrocarbure en C₁-C₈ et R₁₃ signifie l'hydrogène ou un reste d'hydrocarbure en C₁-C₅.

8. Un agent selon la revendication 7, caractérisé en ce que R₁₄ signifie un groupe C₁-C₄-alcoxy, P signifie un groupe C₁-C₄-alkyle, X signifie O, A signifie un groupe C₁-C₄-alkylène et R₁₃ signifie un groupe C₁-C₄-alkyle.

9. Un agent selon la revendication 8, caractérisé en ce que R₁₄ signifie un groupe méthoxy, P signifie un groupe méthyle, A signifie un groupe méthylène et R₁₃ signifie un groupe iso-propyle.

10. Un agent selon la revendication 1, caractérisé en ce que R signifie un reste de formule 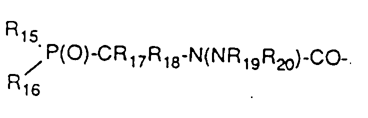 où R₁₅ et R₁₆ signifient indépendamment l'un de l'autre un groupe hydroxy, C₁-C₄-alkyle ou C₁-C₄-alcoxy, R₁₇ et R₁₈ signifient indépendamment l'un de l'autre l'hydrogène ou un groupe C₁-C₄-alkyle, et R₁₉ signifie l'hydrogène ou un reste de formule -COOR₀₇ où R₀₇, signifie un groupe C₁-C₄-alkyle, et R₂₀ signifie l'hydrogène ou un groupe C₁-C₄-alkyle.

11. Un agent selon la revendication 10, caractérisé en ce que R₁₆ et R₁₅ signifient un groupe C₁-C₄-alcoxy, R₁₇ et R₁₈ signifient l'hydrogène, R₁₉ signifie un reste de formule -COOR₀₇ où R₀₇ signifie un groupe C₁-C₄-alkyle, et R₂₀ signifie l'hydrogène.

12. Un agent selon la revendication 11, caractérisé en ce que R₁₅ et R₁₆ signifient un groupe iso-propyloxy et R₁₉ signifie -COOC₂H₅.

13. Un agent selon la revendication 1, caractérisé en ce que comme composé de formule II, il contient un composé de formule III 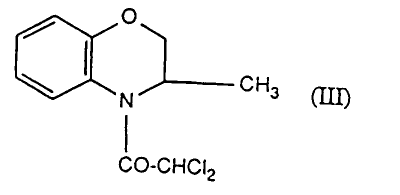 ou de formule IV 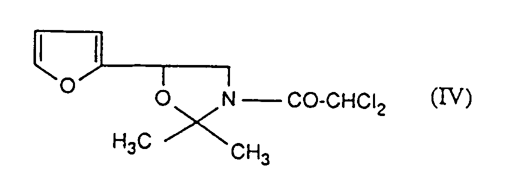 ou de formule V

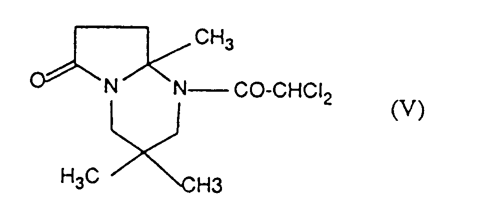

14. Un procédé de lutte sélective contre les mauvaises herbes et les herbes dans les cultures de plantes utiles, caractérisé en ce qu'on traite les cultures, leurs semences ou les surfaces cultivées avec ces plantes, simultanément ou indépendamment, avec une quantité efficace d'un herbicide de formule I selon la revendication 1 et avec une quantité efficace comme antagoniste du point de vue herbicide d'un composé de formule II selon la revendication 1.

15. Un procédé selon la revendication 14, caractérisé en ce qu'on traite les cultures des plantes cultivées ou les surfaces destinées à être cultivées avec des plantes cultivées avec 0,001 à 10 kg/ha d'un composé de formule I selon la revendication 1 et avec une quantité de 0,005 à 0,5 kg/ha d'un composé de formule II selon la revendication 1.

16. Un procédé selon la revendication 14, pour la lutte sélective contre les mauvaises herbes et les herbes dans les cultures de maïs.
